# EUROPÄISCHE PATENTANMELDUNG

(11) **EP 4 671 079 A1**
(43) Veröffentlichungstag der Anmeldung: **31.12.2025**
(21) Anmeldenummer: 25168161.5
(22) Anmeldetag: 03.04.2025
(51) Int. Cl.: B61D 37/00, B61D 49/00, B60N 3/02

(54) **HALTESTANGENANORDNUNG**

(30) Priorität: 28.06.2024 DE 102024206088
(71) Anmelder: Siemens Mobility GmbH, 80997 München (DE)
(72) Erfinder: Wanczura, Stefan, 45665 Recklinghausen (DE)
(74) Vertreter: Siemens Patent Attorneys

(57) **Zusammenfassung**

Die Erfindung betrifft eine Haltestangenanordnung 10, insbesondere für ein Fahrzeug des Personentransports 1, umfassend eine Basis 100 und ein Haltestangenelement 200 mit zumindest einer Haltestange 230, wobei das Haltestangenelement 200 an der Basis 100 befestigt ist, wobei das Haltestangenelement 200 und die Basis 100 über eine Kegelverbindung 300 verbunden sind.

## Beschreibung

Die Erfindung betrifft eine Haltestangenanordnung, insbesondere für ein Fahrzeug des Personentransports, umfassend eine Basis und ein Haltestangenelement mit zumindest einer Haltestange, wobei das Haltestangenelement an der Basis befestigt ist.

Ferner betrifft die Erfindung ein Fahrzeug des Personentransports, umfassend zumindest eine solche oder wie nachfolgend beschrieben, weitergebildete Haltestangenanordnung.

Bisherige Lösungen von Haltestangenanordnungen sahen in der Regel so aus, dass eine geschraubte Basis-Platte mit der Untergestell-Bodenplatte verbunden wurde. An diese Basis-Platte wurde dann das Bauteil angeschraubt. Sämtliche Betriebskräfte müssen dann über die Schraubenverbindung in den Rohbau eingeleitet werden. Haltestangenanordnungen und deren Anbindung an den Rohbau sind - nach dem Stand der Technik - daher relativ voluminös und es sind zudem mehrere Verbindungsschrauben erforderlich.

Ausgehend davon liegt der Erfindung die Aufgabe zugrunde eine einfach zu montierende und kleinbauende Haltestangenanordnung bereitzustellen, die es erlaubt, Fertigungstoleranzen einfach auszugleichen.

Diese Aufgabe wird durch die Haltestangenanordnung des Anspruchs 1 und das Fahrzeug des Personentransports des Anspruchs 10 gelöst.

Vorteilhafte Ausgestaltungen und Weiterbildungen sind Gegenstand der jeweiligen Unteransprüche.

Erfindungsgemäß wird eine Haltestangenanordnung, insbesondere für ein Fahrzeug des Personentransports, bereitgestellt, umfassend eine Basis und ein Haltestangenelement mit zumindest einer Haltestange, wobei das Haltestangenelement an der Basis befestigt ist. Das Haltestangenelement und die Basis sind über eine Kegelverbindung verbunden.

Erfindungsgemäß wird ferner ein Fahrzeug des Personentransports bereitgestellt, umfassend eine solche, oder wie nachfolgend beschrieben, weitergebildete Haltestandgenanordnung.

Hierdurch wird eine schnellmontagefähige, sehr kompakte, wiederlösbare Schnittstelle im fußbodennahen Bereich geschaffen.

Erfindungsgemäß wird eine räumlich einstellbare Haltestangenanordnung, insbesondere für Fahrzeuge zur Personenbeförderung, geschaffen, welche bei der Montage um eine vertikale Achse um 360° drehbar ist, damit Fertigungstoleranzen (z.B. vom Wagenkasten) ausgeglichen werden können.

Die erfindungsgemäße Haltestangenanordnung ist einfach konstruiert und leicht zu justieren.

Ferner ist die erfindungsgemäße Haltestangenanordnung ein Schnellmontagekonzept, welches einbaufertig in das Fahrzeug einbringbar ist und keine weiteren vorbereitenden Tätigkeiten wie z.B. Bohren, Nieten etc. erfordert.

Die Anbindung an den Rohbau eines Fahrzeugs kann wahlweise lösbar (z.B. geschraubt) oder unlösbar (z.B. geschweißt) ausgeführt werden.

Bei der Kegelverbindung sitzt der Kegel auf der Kegelaufnahme mit einer kegeligen Aufnahme oder Nut mit gleichem Kegelwinkel, wie der Kegel. Das Flächenpaar der Kegelverbindung, welches miteinander in Kontakt steht, weist die Form eines Kegelstumpfes auf.

Bei einem großen Kegelwinkel wird eine axiale Kraft benötigt, die die Nabe auf den Kegel hält. Ist der Kegel flacher, hält die Nabe durch die Flächenpressung (z.B. Morsekegel). Das Kegelverhältnis ist entscheidend für die Lösbarkeit der Verbindung.

Durch die erfindungsgemäße Haltestangenanordnung mit der Kegelverbindung können große, wechselnde und stoßartige Drehmomente und Kräfte übertragen werden. Die Kegelverbindung gewährleistet einen genauen, zentrischen Sitz.

Die von einer Kegelsitzverbindung übertragbaren Kräfte hängen maßgeblich vom Neigungswinkel bzw. Kegelverhältnis ab. Unter Kegelverhältnis versteht man das Verhältnis von großem Kegeldurchmesser zu kleinem Kegeldurchmesser in Bezug auf die Kegellänge. Je kleiner das Kegelverhältnis ist, umso größer ist die Umsetzung der axialen Eintreibkraft in die Normalkräfte an den Kegelflanken und umso größere Belastungskräfte können übertragen werden. Größere Normalkräfte bewirken größere Reibkräfte und damit auch ein größeres Reibmoment.

In Ausgestaltung der Haltestangenanordnung kann vorgesehen sein, dass in einer Montageposition das Haltestangenelement relativ zur Basis in Azimut ausrichtbar ausgebildet ist und/oder in einer Fixierposition das Haltestangenelement relativ zur Basis fixierbar ausgebildet ist.

Die Kegelverbindung ist vorzugsweise derart ausgebildet, dass das Haltestangenelement relativ zur Basis fixierbar ausgebildet ist. Vor dem Fixieren kann das Haltestangenelement im Azimut ausgerichtet werden.

Der Azimut ist die Ausrichtung bzw. der Drehwinkel der Haltestangenanordnung um die Flächennormale der Basis bzw. des Bodens des Fahrzeugs.

Vorzugsweise ist die Haltestangenanordnung, in Bezug auf den Azimut, um 360° ausrichtbar.

Hierdurch wird erreicht, dass eine ausreichend große Einstellbarkeit gegeben ist. Bisherige Haltestangenanordnungen sind nicht in der Lage, derart große Toleranzen auszugleichen und entsprechend stufenlos einstellbar zu sein. Vielmehr weisen entsprechende Anordnungen lediglich ein geringes Spiel auf und sind dazu ausgebildet, kleinere Abweichungen im Bereich von Millimetern oder wenigen Zentimetern, auszugleichen, damit eine Haltestange oben und unten mit einem Fahrzeugrohbau verbunden werden kann.

In der Fixierposition ist das Haltestangenelement festgesetzt, sodass dieses während des Betriebs des Fahrzeugs eine sichere Möglichkeit für einen Fahrgast bietet, sich festzuhalten.

In Ausgestaltung der Haltestangenanordnung kann vorgesehen sein, dass die Kegelverbindung eine Kegelaufnahme und einen Kegel aufweist, welche miteinander in kraftschlüssigem, vorzugsweise reibschlüssigem, Kontakt stehen.

Durch das Bereitstellen eines Kegels und einer Kegelaufnahme, wird eine einstellbare Lagerung bereitgestellt. Dieses Prinzip gestattet es, eine der Haltestangenanordnung, sowie eine Einstellbarkeit in Form einer kompletten 360°-Drehung um eine vertikale Achse zu realisieren, in der Montageposition.

In Ausgestaltung der Haltestangenanordnung kann vorgesehen sein, dass die Haltestangenanordnung eine Verdrehsicherung aufweist, welche in Fixierposition ein Verdrehen in Azimut verhindert, wobei die Verdrehsicherung vorzugsweise als zumindest ein Nut- und Nasenpaar ausgebildet ist, das an der Basis und dem Haltestangenelement ausgebildet ist.

Hierdurch wird erreicht, dass in Fixierposition ein Verdrehen verhindert wird, auch wenn unerwartet große Kräfte wirken. Ferner erlaubt die Verdrehsicherung definierte Azimut-Positionen einzunehmen.

In Ausgestaltung der Haltestangenanordnung kann vorgesehen sein, dass die Haltestangenanordnung ein Fixierelement aufweist, dass zur Erzeugung einer Vorspannkraft ausgebildet ist, welche auf die Kegelverbindung wirkt.

Die Fixierung, nach dem Ausrichten der Haltestangenanordnung in Fixierposition im Fahrzeug (bspw. Lotrecht), erfolgt über das Fixierelement (beispielsweise eine Schraube), welches auf das System des Kegels und der Kegelaufnahme eine Vorspannkraft ausübt und die Bauteile über einen Reibschluss fixiert.

Beim der Kegelverbindung wird eine axiale Einpresskraft durch das Fixierelement (bspw. der eine Verschraubung) aufgebracht.

In Ausgestaltung der Haltestangenanordnung kann vorgesehen sein, dass die Kegelverbindung, vorzugsweise der Kegel und/oder die Kegelaufnahme, eine reibwerterhöhende Oberfläche und/oder Beschichtung aufweist/aufweisen.

Hierdurch ist es möglich, größerer Kräfte bzw. Momente zu übertragen.

Vorzugsweise wird die Reibwerterhöhung dadurch realisiert, dass eine nickelbeschichtete Oberfläche mit eingebetteten Diamanten vorgesehen ist oder alternativ aus einer, zwischen Kegel und Kegelaufnahme montierten dünnen Folie (beispielsweise mit einer Dicke von 0,1 mm), vorgesehen wird, mit eben diesen Eigenschaften.

Hierdurch können, um den Faktor 3 bis 5, höhere Drehmomente oder Kräfte durch die Kontaktpartner übertragen werden bei gleicher Vorspannkraft.

In Ausgestaltung der Haltestangenanordnung kann vorgesehen sein, dass das zumindest eine Haltestangenelement einen Grundkörper und/oder ein Anbindungselement aufweist.

Hierdurch wird eine modulare Gestaltung der Haltestangenanordnung bereitgestellt.

In Ausgestaltung der Haltestangenanordnung kann vorgesehen sein, dass die Kegelverbindung ein Kegelverhältnis aufweist, das derart ausgebildet ist, dass die Kegelverbindung nicht selbsthemmend ist, und wobei die Kegelverbindung vorzugsweise als Steilkegelverbindung ausgebildet ist.

Bei einem Verhältnis bis 1:5, ist die Verbindung leicht. Bei einem Verhältnis darüber, tritt Selbsthemmung auf. Die Verbindung ist schwer zu lösen. Die Kegelverbindung hat eine hohe Laufruhe, ist jedoch teuer in der Herstellung.

Steilkegelverbindungen sind beispielsweise in der DIN 2079 für Spindelköpfe von Werkzeugmaschinen normiert. Das Kegelverhältnis kann beispielsweise 7:24 betragen.

In Ausgestaltung der Haltestangenanordnung kann vorgesehen sein, dass die Basis, zusammen mit dem Grundkörper oder dem Anbindungselement, die Kegelverbindung ausbildet, wobei vorzugsweise der Grundkörper oder das Anbindungselement den Kegel aufweisen und die Basis die Kegelaufnahme aufweist. Alternativ kann vorgesehen sein, dass der Grundkörper oder das Anbindungselement die Kegelaufnahme aufweisen und die Basis den Kegel aufweist.

Hierdurch ist ein modularer Aufbau der Haltestangenanordnung gewährleistet.

In Ausgestaltung des Fahrzeugs des Personentransports kann vorgesehen sein, dass das Fahrzeug des Personentransports eine Bodenkonstruktion aufweist und die Haltestangenanordnung an der Bodenkonstruktion befestigt ist, wobei die Basis integraler Bestandteil der Bodenkonstruktion ist und vorzugsweise mit zumindest einer umlaufenden Schweißnaht an der Bodenkonstruktion befestigt ist.

Es kann vorgesehen sein, dass die Hüllkontur der Basis nicht, oder nur wenig, über eine Fußbodenoberkante bspw. eines auf der Bodenkonstruktion montierten Fußbodens, hinausragt. Dies ist insofern wichtig, um die nachfolgenden Montageschritte, wie Einbringen der Fußbodenplatte, oder das Aufbringen des Fußbodenbelages, nicht zu behindern/zu erschweren.

In Ausgestaltung des Fahrzeugs des Personentransports kann vorgesehen sein, dass die Basis mit einer umlaufenden ersten Schweißnaht an einen Obergurt der Bodenkonstruktion angebunden ist, vorzugsweise derart, dass ein Fuß der Basis im Stumpfstoß an den Obergurt angeschweißt ist.

Hierdurch wird eine einfache Herstellbarkeit der Verbindung von Haltestangenanordnung und Bodenkonstruktion erreicht.

In Ausgestaltung des Fahrzeugs des Personentransports kann vorgesehen sein, dass die Basis die Hüllkontur der Bodenkonstruktion nicht oder um weniger als 15cm, vorzugsweise weniger als 10cm, insbesondere weniger als 5cm, überragt und mit zwei umlaufenden Schweißnähten an die Bodenkonstruktion angebunden ist, wobei die Basis mit einer ersten Schweißnaht an den Obergurt geschweißt ist und die Basis mit einer zweiten Schweißnaht an den Untergurt der Bodenkonstruktion angeschweißt ist.

Die Schnittstelle wird dabei als entsprechend ausgebildetes Formstück fest in die Untergestell-Bodenplatte integriert (i.d.R. durch eine umlaufende Anschluss - Schweißnaht) und ist fester Bestandteil dieser. Hierdurch wird eine besonders starke Verbindung zwischen Bodenkonstruktion und Haltestangenanordnung geschaffen.

In Ausgestaltung des Fahrzeugs des Personentransports kann vorgesehen sein, dass die zumindest eine Haltestangenanordnung mittig in einer Querrichtung des Fahrzeugs des Personentransports, angeordnet ist.

Hierdurch wird eine gute Zugänglichkeit und ansprechende optische Gestaltung des Fahrzeugs erreicht.

In Ausgestaltung des Fahrzeugs des Personentransports kann vorgesehen sein, dass die Verdrehsicherung, vorzugsweise das Nut- und Nasenpaar, derart an der Basis und dem Haltestangenelement angeordnet ist, dass die Haltestangenanordnung im Azimut in zumindest einer definierten Azimut-Position ausricht- und fixierbar ist, um eine definierte Ausrichtung der Haltestangenanordnung im Fahrzeug des Personentransports zu erreichen.

Hierdurch wird erreicht, dass die Haltestangenanordnung relativ zur Bodenkonstruktion in einer definierten Position ausgerichtet werden kann.

In Ausgestaltung ist vorgesehen, dass die Haltestangenanordnung nur mit einer Seite (oben bzw. unten) mit einer Rohbaustruktur des Fahrzeugs verbunden ist. Ein Ende der Haltestangenanordnung ist somit ein freies Ende.

Hierdurch wird eine hohe Ergonomie erreicht und eine Mehrfachgriffmöglichkeit für mehrere Fahrgäste bei gleichzeitiger einfacher Herstellerbarkeit angeboten.

In Ausgestaltung des Fahrzeugs des Personentransports kann vorgesehen sein, dass das Fahrzeug des Personentransports eine Bodenkonstruktion aufweist und die Haltestangenanordnung an der Bodenkonstruktion, vorzugsweise nur an der Bodenkonstruktion, befestigt ist.

Das Konzept sieht vor, dass die Haltestangenanordnung auf dem Fußboden, bzw. der Bodenplatte des Untergestells befestigt wird, also keine obere Anbindung hat.

Hierdurch wird eine hohe Ergonomie für den Fahrgast erreicht und gleichzeitig eine Beeinträchtigung des Sichtfeldes des Fahrgastes vermieden. Vorzugsweise ist die Haltestangenanordnung derart ausgebildet, dass ein Fahrgast im stehenden Zustand über die Haltestangenanordnung hinwegblicken kann.

In Ausgestaltung des Fahrzeugs des Personentransports kann vorgesehen sein, dass das Fahrzeug des Personentransports ein spurgeführtes Fahrzeug, vorzugsweise ein Schienenfahrzeug, ist.

Vorzugsweise handelt es sich bei dem Schienenfahrzeug um eine Commuterbahn, eine Regionalbahn oder eine S-Bahn.

Nachfolgend soll die Erfindung anhand mehrerer Ausführungsformen mit Bezug auf die Zeichnungen erläutert werden.

Es zeigt:
- Fig. 1: eine schematische perspektivische Darstellung eines erfindungsgemäßen Fahrzeugs des Personentransports;
- Fig. 2: eine schematische Schnittdarstellung einer erfindungsgemäßen Haltestangenanordnung in Montageposition;
- Fig. 3: eine schematische Schnittdarstellung der erfindungsgemäßen Haltestangenanordnung in Fixierposition;
- Fig. 4: eine schematische Schnittdarstellung der erfindungsgemäßen Haltestangenanordnung;
- Fig. 5: eine schematische Schnittdarstellung der erfindungsgemäßen Haltestangenanordnung in einem Fahrzeug des Personentransports gemäß der ersten Ausführungsform;
- Fig. 6: eine schematische Schnittdarstellung der erfindungsgemäßen Haltestangenanordnung in einem Fahrzeug des Personentransports gemäß der zweiten Ausführungsform;

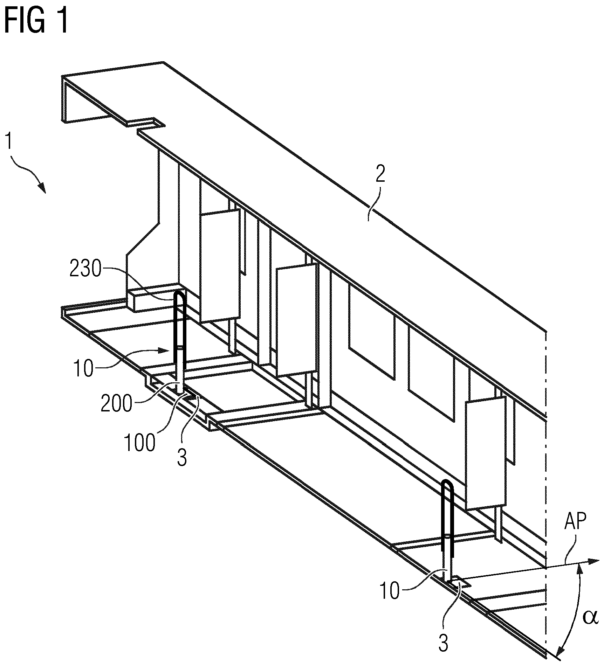

Fig. 1 zeigt eine schematische perspektivische Darstellung eines erfindungsgemäßen Fahrzeugs des Personentransports 1.

Das Fahrzeug des Personentransports 1 umfasst zumindest eine Haltestandgenanordnung 10.

Das Fahrzeug des Personentransports 1 weist eine Bodenkonstruktion 3 auf und die Haltestangenanordnung 10 ist an der Bodenkonstruktion 3 befestigt.

Die zumindest eine Haltestangenanordnung 10 ist bspw. mittig in einer Querrichtung des Fahrzeugs des Personentransports 1 angeordnet.

Das Fahrzeug des Personentransports 1 ist vorzugsweise ein spurgeführtes Fahrzeug, ferner vorzugsweise ein Schienenfahrzeug.

Die Haltestangenanordnung 10 ist insbesondere für ein Fahrzeug des Personentransports 1 ausgebildet, wie in Fig. 1 gezeigt.

Die Haltestangenanordnung 10 umfasst eine Basis 100 und ein Haltestangenelement 200 mit zumindest einer Haltestange 230, wobei das Haltestangenelement 200 an der Basis 100 befestigt ist.

In Ausgestaltung des Fahrzeugs des Personentransports 1 ist die Basis 100 integraler Bestandteil der Bodenkonstruktion 3 und ist vorzugsweise mit zumindest einer umlaufenden Schweißnaht S₁, S₁', S₂' an der Bodenkonstruktion 3 befestigt.

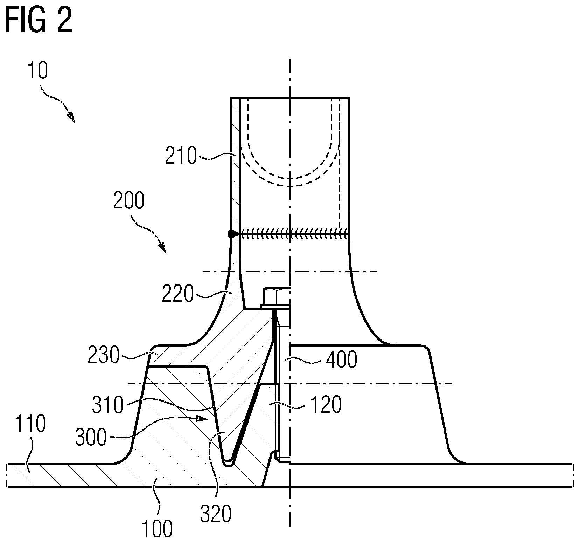

Fig. 2 zeigt eine schematische perspektivische Darstellung einer erfindungsgemäßen Haltestangenanordnung 10 in Montageposition P₁.

Die Kegelverbindung 300 ist derart ausgebildet, dass in einer Montageposition P₁ das Haltestangenelement 200 relativ zur Basis 100 in Azimut α ausrichtbar ist.

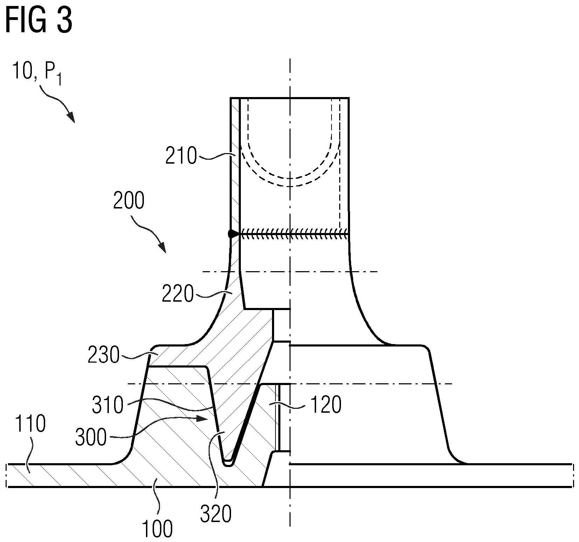

Fig. 3 zeigt eine schematische perspektivische Darstellung der erfindungsgemäßen Haltestangenanordnung in Fixierposition P₂.

Die Kegelverbindung 300 ist derart ausgebildet, dass in einer Fixierposition P₂ das Haltestangenelement 200 relativ zur Basis 100 fixierbar ist.

Das Haltestangenelement 200 und die Basis 100 sind über eine Kegelverbindung 300 verbunden.

Die Kegelverbindung 300 weist eine Kegelaufnahme 310, und einen Kegel 320 auf, welche miteinander in kraftschlüssigem, vorzugsweise reibschlüssigem, Kontakt stehen.

Die Haltestangenanordnung 10 eine Verdrehsicherung aufweist, welche in Fixierposition P₂ ein Verdrehen in Azimut α verhindert, wobei die Verdrehsicherung vorzugsweise als zumindest ein Nut- und Nasenpaar ausgebildet ist, das an der Basis 100 und dem Haltestangenelement 200 ausgebildet ist.

Wie aus Fig. 2 ersichtlich ist, weist die Haltestangenanordnung 10 ein Fixierelement 400 auf, dass zur Erzeugung einer Vorspannkraft F ausgebildet ist, welche auf die Kegelverbindung 300 wirkt.

Gemäß Figur 2 ist das Fixierelement 400 als Schraube ausgebildet. Die Schraube liegt an dem Haltestangenelement 200 an und ist in ein Innengewinde 120 in der Basis 100 eingeschraubt.

Wie aus den Fig. 2 und 3 ersichtlich ist, weist/weisen die Kegelverbindung 300, vorzugsweise die Pfanne 320 und/oder der Kopf 310, eine reibwerterhöhende Oberfläche und/oder Beschichtung auf.

Das zumindest eine Haltestangenelement 200 weist einen Grundkörper 210 und/oder ein Anbindungselement 220 auf. Gemäß den Figuren sind der Grundkörper 210 und das Anbindungselement 220 miteinander verschweißt. Es ist aber auch möglich, dass eine lösbare Verbindung zwischen dem Grundkörper 210 und dem Anbindungselement 220 ausgebildet ist.

Die Basis 100 bildet zusammen mit dem Grundkörper 210 oder dem Anbindungselement 220 die Kegelverbindung 300 aus, wobei vorzugsweise der Grundkörper 210 oder das Anbindungselement 220 den Kegel 320 aufweisen und die Basis 100 die Kegelaufnahme 310 aufweist oder der Grundkörper 210 oder das Anbindungselement 220 den Kegelaufnahme 310 aufweisen und die Basis den Kegel 320 aufweist.

Gemäß Fig. 2 und Fig.3 bildet die Basis 100, zusammen mit dem Anbindungselement 220 die Kegelverbindung 300 aus, wobei das Anbindungselement 220 den Kegel 320 aufweist und die Basis 100 die Kegelaufnahme 310 aufweist

Es ist vorgesehen, dass die Kegelverbindung 300 ein Kegelverhältnis aufweist, das derart ausgebildet ist, dass die Kegelverbindung 300 nicht selbsthemmend ist.

Die Kegelverbindung 300 ist vorzugsweise als Steilkegelverbindung ausgebildet.

Steilkegelverbindungen sind beispielsweise in der DIN 2079 für Spindelköpfe von Werkzeugmaschinen normiert. Das Kegelverhältnis kann beispielsweise 7:24 betragen.

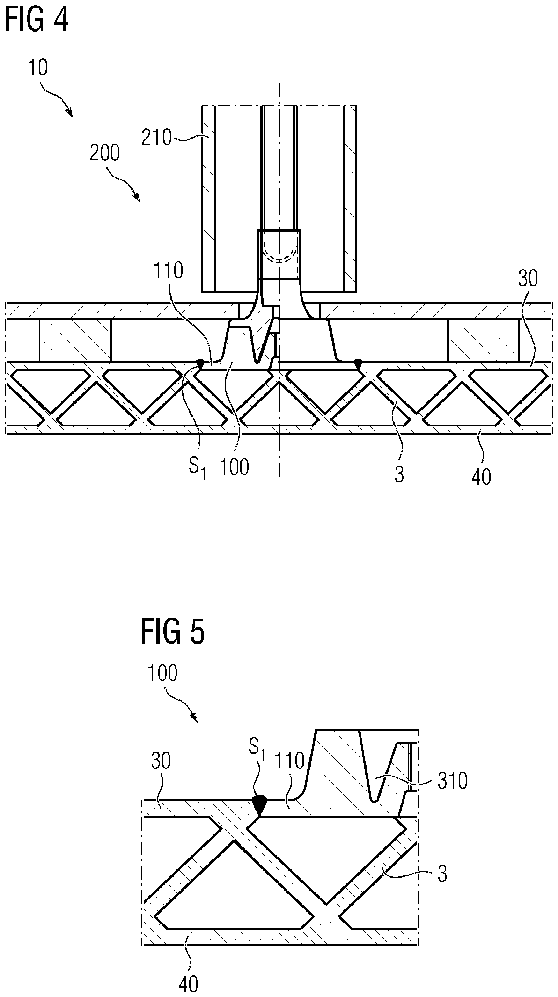

Fig. 4 zeigt eine schematische Schnittdarstellung der erfindungsgemäßen Haltestangenanordnung 10.

Gemäß Fig. 4 ist die Basis 100 mit einer umlaufenden ersten Schweißnaht S₁ an einen Obergurt 30 der Bodenkonstruktion 3 angebunden, vorzugsweise derart, dass ein Fuß 110 der Basis 100 im Stumpfstoß an den Obergurt 30 angeschweißt ist.

Wie aus der Figur 4 erkennbar ist, ist auf der Bodenkonstruktion mithilfe von Platzhaltern eine Fußbodenplatte angeordnet. Auf der Fußbodenplatte kann ein Belag befestigt sein. Die Haltestangenanordnung 10 ist dabei derart ausgebildet, dass die Basis 100 nicht die Fußbodenplatte und/oder den darauf befestigten Belag überragt.

Fig. 5 zeigt eine schematische Schnittdarstellung der erfindungsgemäßen Haltestangenanordnung 10 in einem Fahrzeug des Personentransports 1 gemäß der ersten Ausführungsform. Hier ist nur die Anbindung der Basis an die Bodenkonstruktion gezeigt.

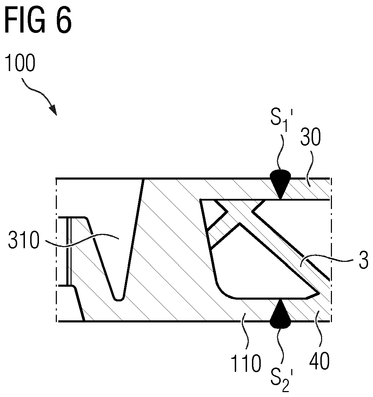

Fig. 6 zeigt eine schematische Schnittdarstellung der erfindungsgemäßen Haltestangenanordnung 10 in einem Fahrzeug des Personentransports 1, gemäß der zweiten Ausführungsform.

Die Basis 100 überragt die Hüllkontur der Bodenkonstruktion 3 nicht oder um weniger als 15cm, vorzugsweise weniger als 10cm, insbesondere weniger als 5cm und ist mit zwei umlaufenden Schweißnähten S₁', S₂' an die Bodenkonstruktion 3 angebunden, wobei die Basis 100 mit einer ersten Schweißnaht S₁' an den Obergurt 30 geschweißt ist und die Basis 100 mit einer zweiten Schweißnaht S₂' an den Untergurt 40 der Bodenkonstruktion 3 angeschweißt ist.

Die Verdrehsicherung, vorzugsweise das Nut- und Nasenpaar, ist derart an der Basis 100 und dem Haltestangenelement 200 angeordnet, dass die Haltestangenanordnung 10 im Azimut α in zumindest einer definierten Azimut-Position AP ausricht- und fixierbar ist (vgl. Fig. 1), um eine definierte Ausrichtung der Haltestangenanordnung 10 im Fahrzeug des Personentransports 1 zu erreichen.

Die vorstehende Offenbarung gilt gleichermaßen für ein Fahrzeug des Personentransports, vorzugsweise ein spurgeführtes Fahrzeug, insbesondere ein Schienenfahrzeug, umfassend zumindest eine, wie vorstehend beschrieben, ausgeführte Haltestangenanordnung. Gleichsam kann sich die vorstehende Offenbarung auch auf einen einzelnen Wagenkasten eines spurgeführten Fahrzeugs beziehen.

Abschließend sei erwähnt, dass die Merkmale aller oben beschriebenen Ausführungsvarianten untereinander in beliebiger Weise kombiniert werden können, um weitere andere Ausführungsbeispiele der Erfindung zu bilden. Auch können alle Merkmale von Unteransprüchen jeweils für sich mit jedem Merkmal jedes anderen der Ansprüche kombiniert werden, und zwar jeweils für sich allein oder in beliebiger Kombination, um weitere andere Ausführungsbeispiele zu erhalten.

Obwohl die Erfindung im Detail durch ein Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Haltestangenanordnung (10), insbesondere für ein Fahrzeug des Personentransports (1), umfassend eine Basis (100) und ein Haltestangenelement (200) mit zumindest einer Haltestange (230), wobei das Haltestangenelement (200) an der Basis (100) befestigt ist,
**dadurch gekennzeichnet, dass**
das Haltestangenelement (200) und die Basis (100) über eine Kegelverbindung (300) verbunden sind.

2. Haltestangenanordnung (10) nach Anspruch 1,
**dadurch gekennzeichnet, dass**
die Kegelverbindung (300) derart ausgebildet ist, dass in einer Montageposition (P₁) das Haltestangenelement (200) relativ zur Basis (100) in Azimut (α) ausrichtbar ausgebildet ist und/oder in einer Fixierposition (P₂) das Haltestangenelement (200) relativ zur Basis (100) fixierbar ausgebildet ist.

3. Haltestangenanordnung (10) nach Anspruch 1 oder 2,
**dadurch gekennzeichnet, dass**
die Kegelverbindung (300) einen Kegelaufnahme (310), und einen Kegel (320), aufweist, welche miteinander in kraftschlüssigem, vorzugsweise reibschlüssigem, Kontakt stehen.

4. Haltestangenanordnung (10) nach einem der vorhergehenden Ansprüche,
**dadurch gekennzeichnet, dass**
die Haltestangenanordnung (10) eine Verdrehsicherung aufweist, welche in Fixierposition (P₂) ein Verdrehen in Azimut (α) verhindert, wobei die Verdrehsicherung vorzugsweise als zumindest ein Nut- und Nasenpaar ausgebildet ist, das an der Basis (100) und dem Haltestangenelement (200) ausgebildet ist.

5. Haltestangenanordnung (10) nach einem der vorhergehenden Ansprüche,
**dadurch gekennzeichnet, dass**
die Haltestangenanordnung (10) ein Fixierelement (400) aufweist, dass zur Erzeugung einer Vorspannkraft (F) ausgebildet ist, welche auf die Kegelverbindung (300) wirkt.

6. Haltestangenanordnung (10) nach einem der vorhergehenden Ansprüche, z
**dadurch gekennzeichnet, dass**
die Kegelverbindung (300), vorzugsweise der Kegel (320) und/oder die Kegelaufnahme (310), eine reibwerterhöhende Oberfläche und/oder Beschichtung aufweist/aufweisen.

7. Haltestangenanordnung (10) nach einem der vorhergehenden Ansprüche,
**dadurch gekennzeichnet, dass**
das zumindest eine Haltestangenelement (200) einen Grundkörper (210) und/oder ein Anbindungselement (220) aufweist.

8. Haltestangenanordnung (10) nach einem der vorhergehenden Ansprüche,
**dadurch gekennzeichnet, dass**
die Kegelverbindung (300) ein Kegelverhältnis aufweist, das derart ausgebildet ist, dass die Kegelverbindung (300) nicht selbsthemmend ist, und wobei die Kegelverbindung (300) vorzugsweise als Steilkegelverbindung ausgebildet ist.

9. Haltestangenanordnung (10) nach einem der vorhergehenden Ansprüche,
**dadurch gekennzeichnet, dass**
die Basis (100) zusammen mit dem Grundkörper (210) oder dem Anbindungselement (220) die Kegelverbindung (300) ausbildet, wobei vorzugsweise der Grundkörper (210) oder das Anbindungselement (220) den Kegel (320) aufweisen und die Basis (100) die Kegelaufnahme (310) aufweist; oder der Grundkörper (210) oder das Anbindungselement (220) den Kegelaufnahme (310) aufweisen und die Basis den Kegel (320) aufweist.

10. Fahrzeug des Personentransports (1), **gekennzeichnet durch** zumindest eine Haltestandgenanordnung (10) nach einem der Ansprüche 1 bis 9.

11. Fahrzeug des Personentransports (1), nach Anspruch 10,
**dadurch gekennzeichnet, dass**
das Fahrzeug des Personentransports (1) eine Bodenkonstruktion (3) aufweist und die Haltestangenanordnung (10) an der Bodenkonstruktion (3) befestigt ist, wobei die Basis (100) integraler Bestandteil der Bodenkonstruktion (3) ist und vorzugsweise mit zumindest einer umlaufenden Schweißnaht (S₁, S₁', S₂') an der Bodenkonstruktion (3) befestigt ist.

12. Fahrzeug des Personentransports (1), nach Anspruch 11,
**dadurch gekennzeichnet, dass**,
die Basis (100) mit einer umlaufenden ersten Schweißnaht (S₁) an einen Obergurt (30) der Bodenkonstruktion (3) angebunden ist, vorzugsweise derart, dass ein Fuß (110) der Basis (100) im Stumpfstoß an den Obergurt (30) angeschweißt ist.

13. Fahrzeug des Personentransports (1), nach Anspruch 11,
**dadurch gekennzeichnet, dass**,
die Basis (100) die Hüllkontur der Bodenkonstruktion (3) nicht oder um weniger als 15cm, vorzugsweise weniger als 10cm, insbesondere weniger als 5cm, überragt und mit zwei umlaufenden Schweißnähten (S₁', S₂') an die Bodenkonstruktion (3) angebunden ist, wobei die Basis (100) mit einer ersten Schweißnaht (S₁') an den Obergurt (30) geschweißt ist und Basis (100) mit einer zweiten Schweißnaht (S₂') an den Untergurt (40) der Bodenkonstruktion (3) angeschweißt ist.

14. Fahrzeug des Personentransports (1), nach einem der Ansprüche 10 bis 13,
**dadurch gekennzeichnet, dass**
die zumindest eine Haltestangenanordnung (10) mittig in einer Querrichtung des Fahrzeugs des Personentransports (1), angeordnet ist.

15. Fahrzeug des Personentransports (1), nach Anspruch 10 bis 14,
**dadurch gekennzeichnet, dass**
das Fahrzeug des Personentransports (1) ein spurgeführtes Fahrzeug, vorzugsweise ein Schienenfahrzeug, ist.

16. Fahrzeug des Personentransports (1), nach einem der Ansprüche 10 bis 15,
**dadurch gekennzeichnet, dass**
die Verdrehsicherung, vorzugsweise das Nut- und Nasenpaar, derart an der Basis (100) und dem Haltestangenelement (200) angeordnet ist, dass die Haltestangenanordnung (10) im Azimut (α) in zumindest einer definierten Azimut-Position (AP) ausrichtbar und fixierbar ist, um eine definierte Ausrichtung der Haltestangenanordnung (10) im Fahrzeug des Personentransports (1) zu erreichen.
